# EUROPEAN PATENT APPLICATION

(11) **EP 2 403 127 A2**
(43) Date of publication of application: **04.01.2012**
(21) Application number: 11167155.8
(22) Date of filing: 23.05.2011
(51) Int. Cl.: H02P 9/04

(54) **Engine Generator Control Module**

(30) Priority: 27.05.2010 US 788965
(71) Applicant: General Electric Company, Schenectady, NY 12345 (US)
(72) Inventor: Haynes, Stephen Murray, Newburgh, IN 47630 (US); Bliss, John Thomas, Atlanta, GA 30339 (US); Deneal Sr., Tyrone, Atlanta, GA 30339 (US); Egbuonu, Mark Eze, Houston, TX 77027 (US)
(74) Representative: Bedford, Grant Richard

(57) **Abstract**

Exemplary embodiments include an engine generator regulator apparatus. The engine generator regulator apparatus can include a voltage regulation module (125), a governor control module (130), a metering module (135) operationally coupled to the voltage regulation and governor control modules (125, 130) and an operation module (140) operationally coupled to the metering module (135), the operation module (14) configured to receive status information from the voltage regulation, governor control and metering modules (125, 130, 135).

## Description

The subject matter disclosed herein relates generally to power regulation and more particularly to systems and methods for diesel generator sets.

Power regulation is desirable so that diesel generator sets provide reliable sources of power. In particular, remote locations with harsh environmental conditions require reliable power sources. For example, oil well drilling rigs utilize multiple diesel generator sets to supply AC power for a drilling drive system, as well as the drilling platform general electrical service. To ensure proper rig operation, the engine generator sets need to provide a reliable stable source of power including accurate control of voltage and frequency. It is also important that the engine generator sets share load so that an individual unit is not overloaded. Often, oil rigs are equipped with individual modules such as diesel engine speed regulators, voltage regulators and protective relays to regulate power.

According to one aspect of the invention, an engine generator regulator apparatus is described. The engine generator regulator apparatus can include a voltage regulation module, a governor control module, a metering module operationally coupled to the voltage regulation and governor control modules and an operation module operationally coupled to the metering module, the operation module configured to receive status information from the voltage regulation, governor control and metering modules.

According to another aspect of the invention, an engine generator regulator system is described. The engine generator regulator system can include an engine generator regulator module, including a voltage regulation module, a governor control module, a metering module operationally coupled to the voltage regulation and governor control modules and an operation module operationally coupled to the metering module, the operation module configured to receive status information from the voltage regulation, governor control and metering module. The engine generator regulator can further include a communications interface coupled to the operation module and configured to remotely communicate with a control location.

According to yet another aspect of the invention, a computer program product for providing power regulation instructions for an engine generator regulator apparatus, the computer program product including instructions for causing a computer to implement a method is described. The method can include regulating voltage in a generator, speed controlling an engine coupled to the generator, monitoring meters coupled to the generator and the engine and sending metering data from the engine generator regulator to an operation interface.

Various advantages and features will become more apparent from the following description taken in conjunction with the drawings.

The subject matter, which is regarded as the invention, is particularly pointed out and distinctly claimed in the claims at the conclusion of the specification. The foregoing and other features, and advantages of the invention are apparent from the following detailed description taken in conjunction with the accompanying drawings in which:
FIG. 1 illustrates a block diagram of an exemplary engine generator control module system.
FIG. 2 illustrates an exemplary embodiment of a processing system for the engine generator regulator.
FIG. 3 illustrates a flow chart of a method for engine generator regulation in accordance with exemplary embodiments.

The detailed description explains embodiments of the invention, together with advantages and features, by way of example with reference to the drawings.

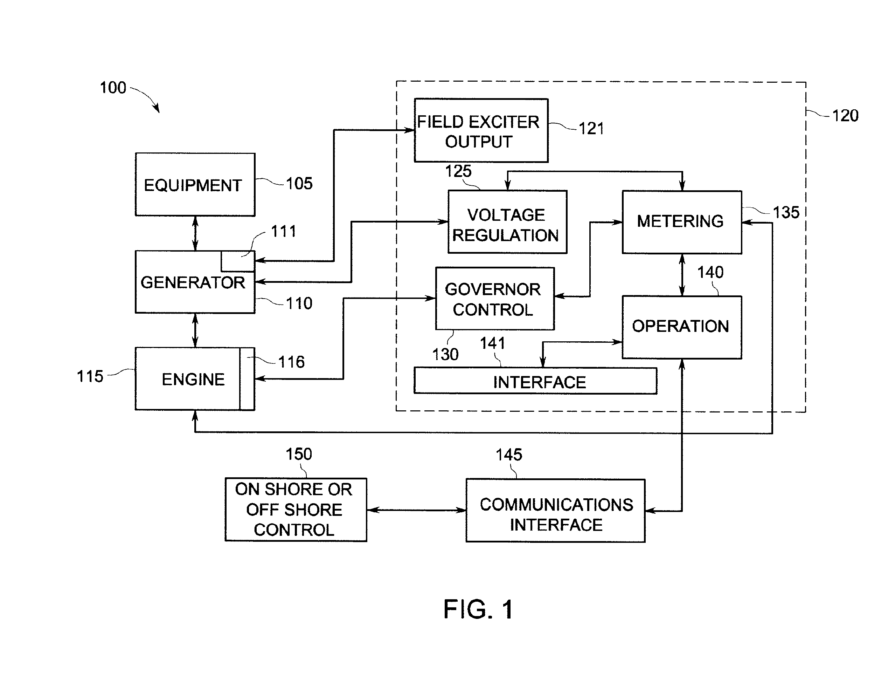

FIG. 1 illustrates a block diagram of an exemplary engine generator control module system 100. The system 100 includes an exemplary engine generator regulator 120 operatively coupled to an external engine 115, which can be via an engine actuator 116 (including but not limited to be a reverse bias actuator), and generator 110. The engine generator regulator 120 provides a single unit providing power regulation functionality for systems needing reliable sources of power. In exemplary embodiments, the engine generator regulator 120 starts the engine 115 and maintains a constant engine speed. The engine generator regulator 120 further regulates the generator 110 output voltage as a source of energy for equipment 105 coupled to the generator 110. The engine generator regulator 120 is further coupled to a communications interface 145, which can further be coupled to a control 150. For illustrative purposes, the equipment 105 is any equipment such as drilling drive systems, used on an oil rig. The engine 115 can be a diesel engine found on oil rigs and the generator 110 can be any variety of electrical generators. Furthermore, the control 150 can be any on-shore or off-shore location in which users can access the engine generator regulator 120 via the communications interface 145 in the event that the engine 115 and/or generator 110 requires control from the control 150 location. It is understood that that equipment 105 can be any equipment that receives power from any type of generator 110 powered by any engine 115. In addition, the power is utilized for functions including, but not limited to, drilling, propulsion, motor pumping, and compressing gas into pipelines. The oil rig example is for illustrative purposes only.

The engine generator regulator 120 further provides system diagnostics for 'first fault' and multiple fault storage and annunciation, as well as internal diagnostic self-test on power up. Outputs provide system KVA and kW limit protection. In addition, temporary generator over-current is permitted by an internal model of the generator. Furthermore, the engine generator regulator 120 includes field excitation capability to excite the generator 110. The engine generator regulator 120 can therefore include a field exciter output 121 coupled to the generator 110 via a field exciter 111. The field excitation can provide ac output up to 240 volts and provides up to 20 amps excitation.

In exemplary embodiments, the engine generator regulator 120 includes embedded communication ports for interfacing with the communications interface 145, including but not limited to Ethernet, RS 232, RS 485 ports and fiber optic extensions (FOX) are available for communication. As further described herein, the communications ports can be disposed on a user interface 141.

In exemplary embodiments, the engine generator regulator 120 protects the engine 115 through tach loss sensing, over-speed detection, and reverse power protection with adjustable time delay. Kilowatt load-sharing can also be included in other protection features. Over-speed provision provides controlled monitoring of the mechanical over-speed limit. The engine generator regulator 120 can set the engine speed, which can include off, idle, run and load. During synchronization of the engine 115, the engine speed can be selected via the engine generator regulator 120. In exemplary embodiments, the rate of engine 115 acceleration can be controlled from idle to running speed. The engine generator regulator 120 can also perform remote idle and shutdown.

In exemplary embodiments, the engine generator regulator 120 can include indicators for alerting a user of several conditions of the system 100, including, but not limited to: generator on; under-voltage; overvoltage/under-frequency; reverse power; over-speed; tachometer loss; summary fault; and processor OK. In a generator on condition, an indicator is implemented to alert a user when a generator breaker is closed and power is being supplied to an AC bus providing power to the equipment 105. For example, when the indicator is in an off state, the generator breaker is open. In an under-voltage condition, an indicator displays that an under voltage condition exists. A trip signal can then be sent to the generator breaker. In an overvoltage/under-frequency condition, an indicator alerts a user when a generator overvoltage or under-frequency condition exists. While a trip signal is sent to the generator breaker for an overvoltage situation, no trip signal is sent for the under-frequency status. For a reverse power condition, when an unacceptable level of reverse power flows from the ac bus back to the generator 110, an indicator appears and a trip signal is sent to the generator breaker. For an over-speed condition, if the engine 115 exceeds programmable over-speed limits, an indicator annunciates the condition. A trip signal is sent to the generator breaker, and a fuel cutoff signal is sent to the engine 115. For a tachometer loss condition, an indicator alerts a user when the tachometer speed signal has been lost, in which case, a trip signal can be sent to the engine 115. For a summary fault condition, an indicator in an off state, a fault condition exists. In addition, a description of the fault can be obtained from additional indicators on the engine generator regulator 120. In a processor OK state, an indicator can be powered on to alert a user that the processor is functioning in a desired state. If the indicator is in an off state, it alerts a user that an internal processor fault exists. In a power supply OK condition, an indicator can be in an on state to alert a user that either incoming or dc battery power is present, and all outputs are functioning in a desirable manner. In exemplary embodiments, the engine generator regulator 120 can also include auto-synchronizing functions to auto start, control the load, check synchronization and monitor dead buses of the engine 115.

In exemplary embodiments, the engine generator regulator 120 can include several modules including but not limited to a voltage regulation module 125, a governor control module 130, a metering module 135 and an operation module 140.

In exemplary embodiments, the voltage regulation module 125 maintains the generator 110 output voltage at a steady value under changing loads. As such, the voltage regulation module controls voltage output, compares generator output to operator settings, changes field voltage to change generator output and permits temporary generator over current.

In exemplary embodiments, the governor control module 130 governs engine 115 speed by controlling the engine actuator 116 (i.e., throttle) position with an electrical signal. As such, the governor control module 130 provides engine 115 protection, tach loss sensing, over-speed detection, reverse power protection, engine 115 control, speed control, engine 115 acceleration control and auto-synchronizing, as described herein. As described herein, the engine speed control can have states including, but not limited to: OFF, IDLE, RUN, and LOAD. In the IDLE state, the engine 115 can be started and runs at idle speed. In the RUN state, the engine 115 runs at normal speed and the generator 110 does not pick up or share load with other on-line generators. In the LOAD state the engine 115 runs at a normal speed and the generator 110 picks up load and work with other on-line generators to equally share the load.

In exemplary embodiments, the metering module 135 includes indicators as described herein. The indicators can include but are not limited to: a wattmeter; a varmeter; a voltmeter; and an ammeter. The wattmeter indicates power generated by the engine and ensures all engines are sharing the load. The varmeter indicates power delivered by the generator 110 and ensures generators are properly paralleled. The voltmeter indicates the voltage of the generator 110 or generator bus. The ammeter indicates the line current per phase on the engine generator regulator 120.

In exemplary embodiments, the operation module 140 provides a user interface 141 for functions of the engine generator regulator as described herein. The operation module 140 further provides access to the communications interface 145. The operation module displays the system 100 status, system 100 faults, a menu of function options as described herein and a self-diagnostic function.

The engine generator regulator 120 can advantageously include processing features as now described.

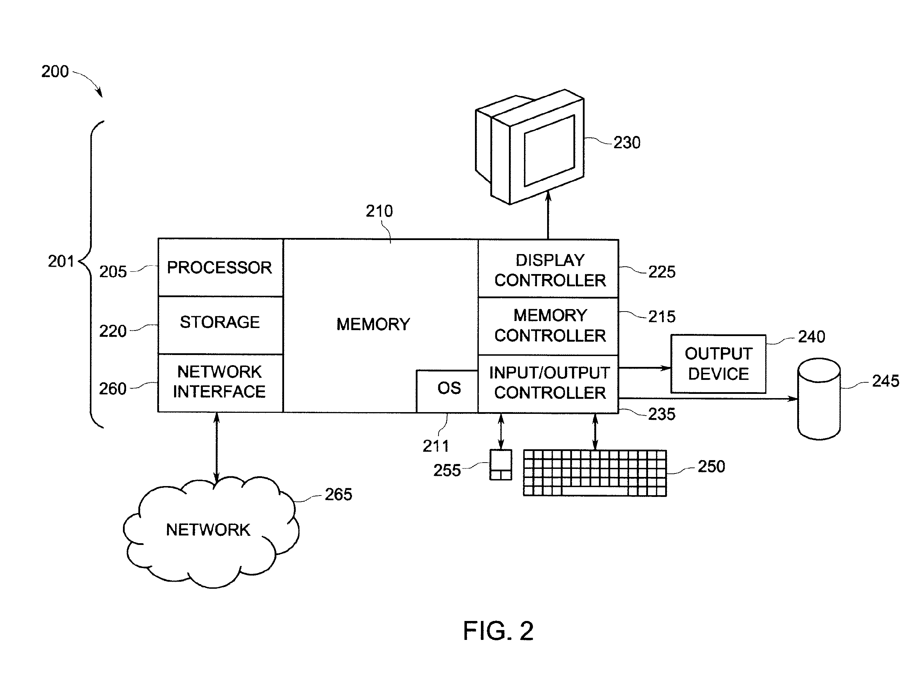

FIG. 2 illustrates an exemplary embodiment of a processing system 200 for the engine generator regulator. The methods and functions described herein can be implemented in software (e.g., firmware), hardware, or a combination thereof. In exemplary embodiments, the methods described herein are implemented in software, as an executable program, and is executed by a special or general-purpose digital computer, such as a personal computer, workstation, minicomputer, or mainframe computer. The system 200 therefore can be implemented as a general-purpose computer 201.

In exemplary embodiments, in terms of hardware architecture, as shown in FIG. 2, the computer 201 includes a processor 205, memory 210 coupled to a memory controller 215, and one or more input and/or output (I/O) devices 240, 245 (or peripherals) that are communicatively coupled via a local input/output controller 235. The input/output controller 235 can be, but is not limited to, one or more buses or other wired or wireless connections, as is known in the art. The input/output controller 235 may have additional elements, which are omitted for simplicity, such as controllers, buffers (caches), drivers, repeaters, and receivers, to enable communications. Further, the local interface may include address, control, and/or data connections to enable appropriate communications among the aforementioned components.

The processor 205 is a hardware device for executing software, particularly that stored in memory 210. The processor 205 can be any custom made or commercially available processor, a central processing unit (CPU), an auxiliary processor among several processors associated with the computer 201, a semiconductor based microprocessor (in the form of a microchip or chip set), a macroprocessor, or generally any device for executing software instructions.

The memory 210 can include any one or combination of volatile memory elements (e.g., random access memory (RAM, such as DRAM, SRAM, SDRAM, etc.)) and nonvolatile memory elements (e.g., ROM, erasable programmable read only memory (EPROM), electronically erasable programmable read only memory (EEPROM), programmable read only memory (PROM), tape, compact disc read only memory (CD-ROM), disk, diskette, cartridge, cassette or the like, etc.). Moreover, the memory 210 may incorporate electronic, magnetic, optical, and/or other types of storage media. Note that the memory 210 can have a distributed architecture, where various components are situated remote from one another, but can be accessed by the processor 205.

The software in memory 210 may include one or more separate programs, each of which comprises an ordered listing of executable instructions for implementing logical functions. In the example of FIG. 2, the software in the memory 210 includes the engine generator regulator methods described herein in accordance with exemplary embodiments and a suitable operating system (OS) 211. The operating system 211 essentially controls the execution of other computer programs, such the engine generator regulator systems and methods as described herein, and provides scheduling, input-output control, file and data management, memory management, and communication control and related services.

The engine generator regulator methods described herein may be in the form of a source program, executable program (object code), script, or any other entity comprising a set of instructions to be performed. When a source program, then the program needs to be translated via a compiler, assembler, interpreter, or the like, which may or may not be included within the memory 210, so as to operate properly in connection with the OS 211. Furthermore, the engine generator regulator methods can be written as an object oriented programming language, which has classes of data and methods, or a procedure programming language, which has routines, subroutines, and/or functions.

In exemplary embodiments, a conventional keyboard 250 and mouse 255 can be coupled to the input/output controller 235, which can be coupled to the interface 141. The keyboard and mouse functions can be implemented into the user interface 141 as keys that can navigate a display 230. For example, the keys can be an industrial-type membrane keyboard. Other output devices such as the I/O devices 240, 245 may include input devices, for example but not limited to a printer, a scanner, microphone, and the like. Finally, the I/O devices 240, 245 may further include devices that communicate both inputs and outputs, for instance but not limited to, a network interface card (NIC) or modulator/demodulator (for accessing other files, devices, systems, or a network), a radio frequency (RF), satellite interface or other transceiver, a telephonic interface, a bridge, a router, and the like. The system 200 can further include a display controller 225 coupled to the display 230. The display can be any type of display (e.g., a liquid crystal display (LCD)) configured to show fault messages, tune-up messages, diagnostic information and other status information. In exemplary embodiments, the system 200 can further include a network interface 260 for coupling to a network 265. The network 265 can be an IP-based network for communication between the computer 201 and any external server, client and the like via a broadband connection. The network 265 transmits and receives data between the computer 201 and external systems. In exemplary embodiments, network 265 can be a managed IP network administered by a service provider. The network 265 may be implemented in a wireless fashion, e.g., using wireless protocols and technologies, such as WiFi, WiMax, etc. The network 265 can also be a packet-switched network such as a local area network, wide area network, metropolitan area network, Internet network, or other similar type of network environment. The network 265 may be a fixed wireless network, a wireless local area network (LAN), a wireless wide area network (WAN) a personal area network (PAN), a virtual private network (VPN), intranet or other suitable network system and includes equipment for receiving and transmitting signals.

If the computer 201 is a PC, workstation, intelligent device or the like, the software in the memory 210 may further include a basic input output system (BIOS) (omitted for simplicity). The BIOS is a set of essential software routines that initialize and test hardware at startup, start the OS 211, and support the transfer of data among the hardware devices. The BIOS is stored in ROM so that the BIOS can be executed when the computer 201 is activated.

When the computer 201 is in operation, the processor 205 is configured to execute software stored within the memory 210, to communicate data to and from the memory 210, and to generally control operations of the computer 201 pursuant to the software. The engine generator regulator methods described herein and the OS 211, in whole or in part, but typically the latter, are read by the processor 205, perhaps buffered within the processor 205, and then executed.

When the systems and methods described herein are implemented in software, as is shown in FIG. 2, the methods can be stored on any computer readable medium, such as storage 220, for use by or in connection with any computer related system or method.

As will be appreciated by one skilled in the art, aspects of the present invention may be embodied as a system, method or computer program product. Accordingly, aspects of the present invention may take the form of an entirely hardware embodiment, an entirely software embodiment (including firmware, resident software, micro-code, etc.) or an embodiment combining software and hardware aspects that may all generally be referred to herein as a "circuit," "module" or "system." Furthermore, aspects of the present invention may take the form of a computer program product embodied in one or more computer readable medium(s) having computer readable program code embodied thereon.

Any combination of one or more computer readable medium(s) may be utilized. The computer readable medium may be a computer readable signal medium or a computer readable storage medium. A computer readable storage medium may be, for example, but not limited to, an electronic, magnetic, optical, electromagnetic, infrared, or semiconductor system, apparatus, or device, or any suitable combination of the foregoing. More specific examples (a non-exhaustive list) of the computer readable storage medium would include the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. In the context of this document, a computer readable storage medium may be any tangible medium that can contain, or store a program for use by or in connection with an instruction execution system, apparatus, or device.

A computer readable signal medium may include a propagated data signal with computer readable program code embodied therein, for example, in baseband or as part of a carrier wave. Such a propagated signal may take any of a variety of forms, including, but not limited to, electro-magnetic, optical, or any suitable combination thereof. A computer readable signal medium may be any computer readable medium that is not a computer readable storage medium and that can communicate, propagate, or transport a program for use by or in connection with an instruction execution system, apparatus, or device.

Program code embodied on a computer readable medium may be transmitted using any appropriate medium, including but not limited to wireless, wireline, optical fiber cable, RF, etc. or any suitable combination of the foregoing.

Computer program code for carrying out operations for aspects of the present invention may be written in any combination of one or more programming languages, including an object oriented programming language such as Java, Smalltalk, C++ or the like and conventional procedural programming languages, such as the "C" programming language or similar programming languages. The program code may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider).

Various aspects of the present invention are described below with reference to flowchart illustrations and/or block diagrams of methods, apparatus (systems) and computer program products according to embodiments of the invention. It will be understood that each block of the flowchart illustrations and/or block diagrams, and combinations of blocks in the flowchart illustrations and/or block diagrams, can be implemented by computer program instructions. These computer program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks.

These computer program instructions may also be stored in a computer readable medium that can direct a computer, other programmable data processing apparatus, or other devices to function in a particular manner, such that the instructions stored in the computer readable medium produce an article of manufacture including instructions which implement the function/act specified in the flowchart and/or block diagram block or blocks.

The computer program instructions may also be loaded onto a computer, other programmable data processing apparatus, or other devices to cause a series of operational steps to be performed on the computer, other programmable apparatus or other devices to produce a computer implemented process such that the instructions which execute on the computer or other programmable apparatus provide processes for implementing the functions/acts specified in the flowchart and/or block diagram block or blocks.

The flowchart and block diagrams in the figures illustrate the architecture, functionality, and operation of possible implementations of systems, methods and computer program products according to various embodiments of the present invention. In this regard, each block in the flowchart or block diagrams may represent a module, segment, or portion of code, which comprises one or more executable instructions for implementing the specified logical function(s). It should also be noted that, in some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts, or combinations of special purpose hardware and computer instructions.

In exemplary embodiments, where the engine generator regulator methods are implemented in hardware, the engine generator regulator methods described herein can implemented with any or a combination of the following technologies, which are each well known in the art: a discrete logic circuit(s) having logic gates for implementing logic functions upon data signals, an application specific integrated circuit (ASIC) having appropriate combinational logic gates, a programmable gate array(s) (PGA), a field programmable gate array (FPGA), etc.

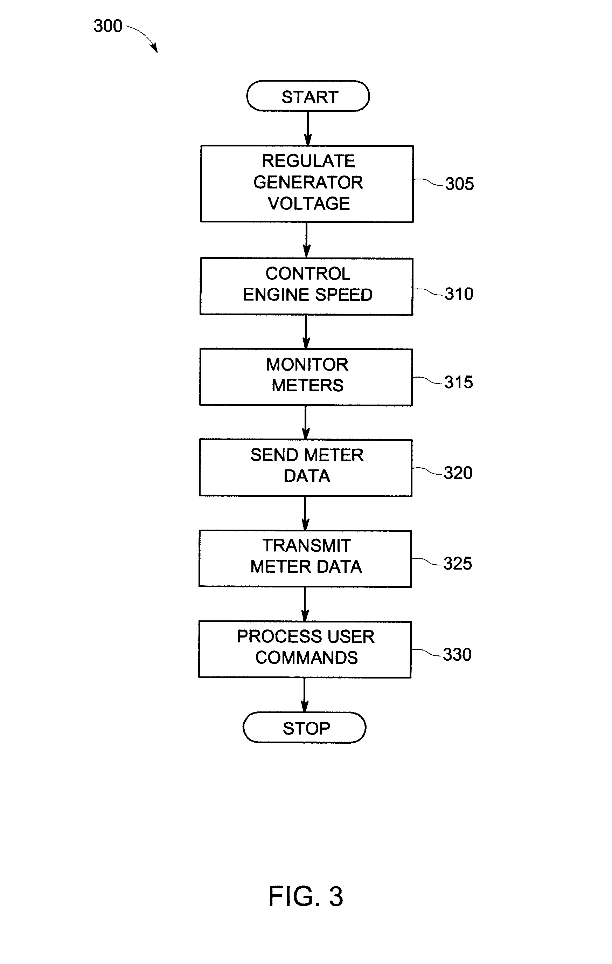

FIG. 3 illustrates a flow chart of a method 300 for engine generator regulation in accordance with exemplary embodiments. The method 300 represents a subset of functionality of the exemplary engine generator regulator 120 described herein. The functions of the engine generator regulator 120 have been described herein. It is appreciated that the method 300 is a subset of the functionality that can be performed in a sequential or a non-sequential manner. As such, the blocks described herein are not necessarily performed in the order as now described. At block 305, the engine generator regulator 120 can regulate the voltage of the generator 110. At block 310 the engine generator regulator 120 can govern the speed of the engine 115. At block 315, the engine generator regulator 120 can monitor the various meters as described herein. At block 320, the engine generator regulator 120 can send the meter data to the user interface 141. At block 325, the engine generator regulator 120 can transmit the meter data via the communications interface 145 to the control location 150. At block 330, the engine generator regulator 120 can process user entered commands via the user interface 141 and the operation module 140. The various user entered commands can be related to the various engine generator regulator 120 functions as described herein.

Various technical effects of certain aspects and embodiments include single unit voltage regulation, engine control, engine/generator diagnostics, self-testing functionality, meter monitoring, engine protection through tach loss sensing, over-speed detection, reverse power protection with adjustable time delay, auto-synchronization, auto-start, load control, synchronization check and monitor dead bus. The exemplary engine generator regulator 120 can operate with various generators. The engine generator regulator 120 can further operate with reverse bias actuators. The engine generator regulator 120 can also provide remote communications with control locations such as on-shore and off-shore control locations for oil rigs.

While the invention has been described in detail in connection with only a limited number of embodiments, it should be readily understood that the invention is not limited to such disclosed embodiments. Rather, the invention can be modified to incorporate any number of variations, alterations, substitutions or equivalent arrangements not heretofore described, but which are commensurate with the spirit and scope of the invention. Additionally, while various embodiments of the invention have been described, it is to be understood that aspects of the invention may include only some of the described embodiments. Accordingly, the invention is not to be seen as limited by the foregoing description, but is only limited by the scope of the appended claims.

Various aspects and embodiments of the present invention are defined by the following numbered clauses:
1. An engine generator control apparatus, comprising:
   a voltage regulation module;
   a governor control module;
   a metering module operationally coupled to the voltage regulation and governor control modules; and
   an operation module operationally coupled to the metering module, the operation module configured to receive status information from the voltage regulation, governor control and metering modules, the operation module configured to communicate the status information to a remote control location.
2. The apparatus as claimed in Clause 1 further comprising a user interface operationally coupled to the operation module.
3. The apparatus as claimed in any preceding Clause wherein the user interface is configured to be coupled to a communications interface for remote communication.
4. The apparatus as claimed in any preceding Clause wherein the remote communication is at least one of wireless, wired, radio and satellite.
5. The apparatus as claimed in any preceding Clause further comprising a wattmeter coupled to the metering module.
6. The apparatus as claimed in any preceding Clause further comprising a varmeter coupled to the metering module.
7. The apparatus as claimed in any preceding Clause further comprising a voltmeter coupled to the metering module.
8. The apparatus as claimed in any preceding Clause further comprising an ammeter coupled to the metering module.
9. The apparatus as claimed in any preceding Clause wherein the voltage regulation module is configured to be coupled to an external generator, via an internal field exciter.
10. The apparatus as claimed in any preceding Clause wherein the governor control module is configured to be coupled to an actuator of an external engine coupled to the external generator.
11. An engine generator control system, comprising:
   an engine generator control module, including:
      a voltage regulation module;
      a governor control module;
      a metering module operationally coupled to the voltage regulation and governor control modules;
      an operation module operationally coupled to the metering module, the operation module configured to receive status information from the voltage regulation, governor control and metering modules; and
      a communications interface coupled to the operation module and configured to remotely communicate with a control location.
12. The system as claimed in any preceding Clause further comprising a generator coupled to the engine generator control module.
13. The system as claimed in any preceding Clause further comprising an engine coupled to the engine generator control module and to the generator.
14. The system as claimed in any preceding Clause further comprising equipment configured to receive power coupled to the generator.
15. The system as claimed in any preceding Clause further comprising a user interface coupled to and between the operation module and the communication interface.
16. The system in any preceding Clause further comprising at least one of a wattmeter, a varmeter, a voltmeter and an ammeter coupled to the metering module.
17. A computer program product for providing power regulation instructions for a engine generator control apparatus, the computer program product including instructions for causing a computer to implement a method, comprising:
   regulating voltage in a generator;
   speed controlling an engine coupled to the generator;
   monitoring meters coupled to the generator and the engine; and
   sending metering data from the engine generator control apparatus to an operation interface.
18. The computer program product as claimed in any preceding Clause wherein the method further comprises transmitting the metering data from the operation interface to a control location via a communications interface.
19. The computer program product as claimed in any preceding Clause wherein meters include at least one of a wattmeter, a varmeter, a voltmeter and an ammeter.
20. The computer program product as claimed in any preceding Clause further comprising processing user-entered commands to control the engine and the generator.

## Claims

1. An engine generator control apparatus, comprising:
a voltage regulation module (125);
a governor control module (130);
a metering module (135) operationally coupled to the voltage regulation and governor control modules (125, 130); and
an operation module (140) operationally coupled to the metering module (135), the operation module (140) configured to receive status information from the voltage regulation, governor control and metering modules (125, 130, 135), the operation module (140) configured to communicate the status information to a remote control (150) location.

2. The apparatus as claimed in Claim 1 further comprising a user interface (141) operationally coupled to the operation module (140).

3. The apparatus as claimed in Claim 2 wherein the user interface (141) is configured to be coupled to a communications interface (145) for remote communication.

4. The apparatus as claimed in Claim 3 wherein the remote communication is at least one of wireless, wired, radio and satellite.

5. The apparatus as claimed in any preceding Claim further comprising a wattmeter coupled to the metering module (135).

6. The apparatus as claimed in any preceding Claim further comprising a varmeter coupled to the metering module (135).

7. The apparatus as claimed in any preceding Claim further comprising a voltmeter coupled to the metering module (135).

8. The apparatus as claimed in any preceding Claim further comprising an ammeter coupled to the metering module (135).

9. The apparatus as claimed in any preceding Claim wherein the voltage regulation module (125) is configured to be coupled to an external generator (110), via an internal field exciter (111).

10. The apparatus as claimed in Claim 9 wherein the governor control module (130) is configured to be coupled to an actuator (116) of an external engine (115) coupled to the external generator (110).
